# EUROPEAN PATENT SPECIFICATION

(11) **EP 1 951 025 B1**
(45) Date of publication and mention of the grant of the patent: **20.07.2011**
(21) Application number: 06808579.4
(22) Date of filing: 17.11.2006
(51) Int. Cl.: A01D 23/04, A01D 23/06, A23N 15/08

(54) **METHOD AND APPARATUS FOR TOPPING VEGETABLES**
VERFAHREN UND VORRICHTUNG ZUM KAPPEN VON GEMÜSE
PROCÉDÉ ET APPAREIL POUR ÉCIMER DES VÉGÉTAUX

(30) Priority: 23.11.2005 GB 0523772
(43) Date of publication of application: 06.08.2008
(73) Proprietor: NICHOLSON MACHINERY LIMITED, Norfolk PE38 0PB (GB)
(72) Inventor: NICHOLSON, David, Norfolk PE38 0PB (GB)
(74) Representative: ip21 Ltd
(86) International application number: PCT/GB2006/004292
(87) International publication number: WO 2007/060397

(56) References cited:
- FR-A1- 2 230 281
- GB-A- 2 119 234
- US-A- 4 031 696
- US-A- 4 031 696
- US-A- 5 750 171

## Description

### Field of the Invention

The invention relates to a method and apparatus for topping vegetables prior to harvesting.

### Background of the Invention

The totality of the prior art known comprises the following documents: FR2230281, GB1366576, SU1071248, US4064681, US4271662, and WO2004/089059. The ultimate document listed is the applicant's own prior application, is the closest piece of prior art and is discussed in the following section of the application.

There is a need for vegetables to be presented to the end-user, e.g. a customer in a supermarket, in as good a condition as possible, since it is acknowledged that most customers are put off by produce which looks in any way "below par", even though such produce may still be nutritionally acceptable. In the case of onions and other root vegetables, it can be off-putting if the upper foliage (so-called "tops") or parts of the root are still left on the produce. In order to remedy the problem of the tops, it is known to remove the tops (a process called "topping") either before or after harvesting. Topping prior to harvesting is preferred, since this is more easily automated, the produce being already embedded in the ground. Furthermore, produce without tops takes up less space and therefore greater numbers can be packed into a given volume for transportation from the field compared with untopped produce, which reduces transport costs.

The topping of produce such as onions can be achieved either manually or, as already mentioned, by machine. In either process there are attendant problems. In the first place, if topping is done without sufficient care both the onion and its top can become at least partially mulched, i.e. becomes very wet and pulpy, and contact between such mulched parts and surrounding onions can cause a stain to be applied to the latter. This stain may start out on the outer skin only, but can over time seep down into deeper layers of the onion, thereby spoiling the produce. A problem at least as serious is that of fungal contamination of the produce. This may take the form of botrytis, which is carried in the air as spores and shows as a powdery bloom on affected produce. It is possible to remove the outer skins of onions which are suffering from botrytis, but again that spoils the appearance of the vegetable. Since botrytis spreads very readily, it is desirable in any topping process to keep any contact between the fungal spores and the produce to be harvested down to a minimum.

In the case of manual topping, the process of cutting off the tops is often not very efficient, with consequent problems of mulching of the produce. Also, the scissors or other implement used for topping have to be periodically washed in order to remove traces of the fungal spores which may have accumulated on the blades. This, of course, is time consuming and reduces topping efficiency. Topping by hand is usually slow anyway, so there is an incentive to automate the process.

Current automated methods of topping include the use of a plurality of blades mounted crosswise to the direction of travel. The blades are surrounded by a cowling or containment rings to increase suction and encourage the cut tops/debris to exit the side of the machine. The problems associated with the use of such automated cutting apparatus are that the debris (cut tops) is thrown sideways via centrifugal force and some of the debris is thus thrown onto the crop and hence is cut again resulting the formation of a mulch which stains the crop when it subsequently lands on the crop. If the debris is not discharged cleanly from the cutting apparatus it builds up on the cowling (and may also become mixed with soil particles) and subsequently drops onto the crop in the form of heavy wet lumps which stain the crop.

The debris formed from the cut tops may be cut several times creating a mist which stains the crop and the mist can also result in the spread of any infection throughout the crop.

In our previous patent application WO 2004/089059 a vegetable topper was described wherein a pair of centrifugal fans were employer to generate an airstream which was used to right the unwanted tops of the vegetables, prior to their cutting off, the airstream then being utilised to carry and deposit the cut tops in a controlled manner with the aid of a physical guide arrangement. Although the system described works well, alternative less expensive means of generating the airflow is desirable as the fans add to the overall cost of producing the device disclosed. The device disclosed herein uses such alternative means to generate a suitable airflow without the use of centrifugal fans.

The present invention seeks to mitigate the above drawbacks of the known topping techniques.

### Summary of the Invention

According to a first aspect of the present invention there is provided a vegetable topping device as in claim 1.

The removal of the cowling normally used on such devices in combination with the use of a plenum chamber as disclosed herein, results in the air flow created by the rotating blades in combination with the use of a suitably shaped plenum chamber giving rise to an airflow which can carry the cut tops, such that they can then be directed to an outlet from where their exit may be controlled. Thus the cut tops are not thrown onto the crop and the expense associated with the provision of centrifugal fans (as used in our previous application for this purpose) is avoided. Additionally the use of traditional cowlings or containment rings which normally surround the blades pushes the tops over making the cutting of the tops by the blades less efficient. This problem is obviated by the device claimed herein. Removing obstructions to the air flow from above the blades (i.e. the cowling) results in the vortex produced by rotation of the blades being elongated, due to a reduction in back pressure, and thus the suction provided by the blades is increased. The use of one or more shaped plenum chambers which creates a smooth flow of air from above the blades to an outlet avoids debris building up on the sides of the device and subsequently dropping onto the crop.

Preferably the device incorporates two blades which are angled between 15° and 45° relative to the ground, in use. It has been found that the use of blades angled between 15° and 45° gave an improved air flow from the blades to the outlet. The use of two rotatable blades has been found to be preferable to the one of one rotatable blade or three or more rotatable blades.

Preferably the first blade is angled at 25° and the second blade at 30° relative to the ground, in use. The angling of blades in this way has proven to be particularly effective at generating an airflow which is directed towards the outlet.

Preferably the plenum chamber comprises a linear portion and an arcuate portion, the arcuate portion directing the cut tops towards the outlet. The provision of a linear portion provides a smooth flow of the air, which contains towards the cut tops/debris, towards the arcuate portion of the chamber. The arcuate portion of the plenum chamber provides means to smoothly direct the airflow containing the cut tops and debris towards a suitably located outlet, such that the tops can be disposed of in a controlled manner, preferably into the wheelings of the device.

Preferably the device comprises two plenum chambers, the first plenum chamber being located ahead of a cross member on which the blade(s) is/are mounted relative to the direction of travel of the device in use, and a second plenum chamber which is located behind the cross member on which the blade(s) is/are mounted, relative to the direction of travel of the device in use. The provision of two plenum chambers helps to ensure that any tops not righted by the first plenum chamber are righted by the second plenum chamber and subsequently cut by the blade(s).

Preferably the outlet opens into a diffusion chamber which directs the airflow and entrained tops into wheelings of the device. The use of such a diffusion chamber enables the tops to be deposited into the wheeling at a much lower velocity than would be possible if the outlet directed the tops directly into the wheelings, thus avoiding the risk of the cut tops/debris coming into contact with the crop which could produce spoiling of the crop or result in the spread of disease. The cut tops/debris tends to be quite moist in character and so stick to the ground in the wheelings rather than being dispersed onto the crop by the airflow from the outlet of the diffuser.

Preferably the diffusion chamber is adapted to allow the outlets from two adjacent devices to be exhausted into the wheelings via the diffusion chamber. In this way a number of vegetable topping devices can be connected together to form an assembly and used simultaneously with only one vehicle required to tow the assembly.

Preferably wings projecting from the upper side of the blade(s), in use, assist in directing cut tops in the direction of the plenum chambers and associated outlets. The provision of such wings helps to direct the airflow and cut tops/debris towards the rear of the blade(s) and upwards, rather than allowing the cut tops/debris to be thrown sideways such that they stick to the sides of the device.

Preferably cutting means are provided to cut tops lying across the wheelings of the device. In a field of crops, wheelings are generated by the farm vehicles used to plant, maintain and harvest the crop. If tops lie across these wheelings then the weight of the farm vehicles used tends to compress portions of the tops in the wheelings into the ground such that they cannot be righted by the vegetable topping device disclosed herein. Cutting means are therefore provided on the device such that the portion of the tops in the wheeling is separated from the rest of the tops thus enabling the rest of the tops to be righted and cut by the device disclosed herein.

Also within the scope of the invention is a method for topping vegetables according to claim 12.

The use of the method disclosed provides a method of topping vegetables which allows vegetable tops to be removed whilst reducing the damage done to the crop by mulched tops falling into the crop.

### Brief Description of the Drawings

The invention will be described with reference to the accompanying drawings in which:
Figure 1 is a perspective view of a topping device according to the invention;
Figure 2 is a schematic plan view of the device of Figure 1 with the rotating blades shown to enable the invention to be more clearly understood.
Figure 3 is a perspective view of two pairs of blades for use with the device of Figure 1.
Figure 4 is a perspective view of the device of Figure 1 shown with a partial section.
Figure 5 is a perspective view of the device of Figure 1 shown with a partial section.
Figure 6 is a front view of the device of Figure 1, with part of the wheels omitted such that the wheel scrapers are visible.
Figure 7 is a rear view of the device of Figure 1, with the wheels and diffusion chambers omitted for the sake of clarity.
Figure 8 shows a plenum chamber of the device of figure 1 shown in cross-section along the line "IV-IV" on Figure 2.
Figure 9 is a sectional view in the direction IX-IX.

### Description of the Preferred Embodiment

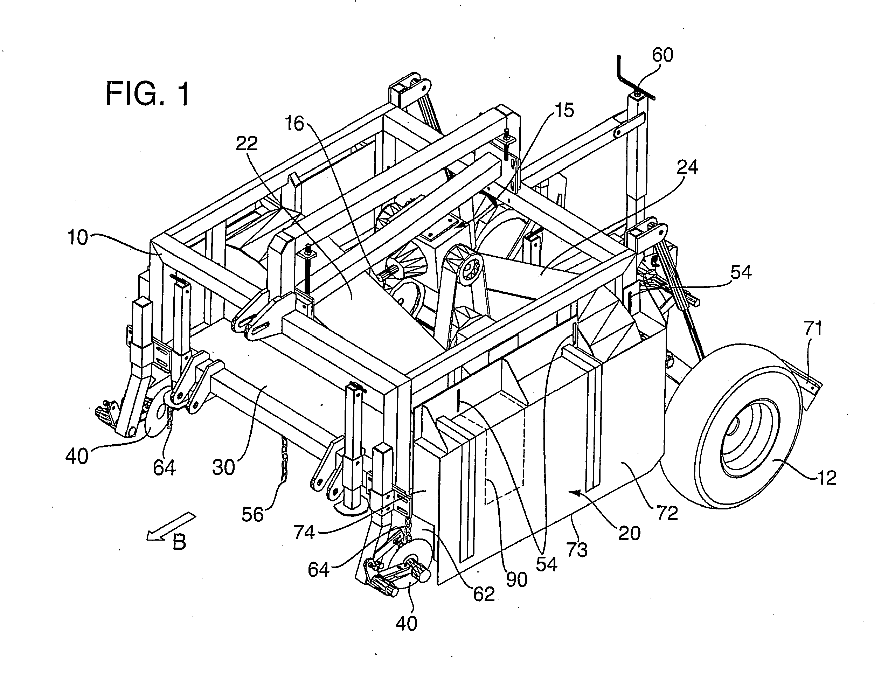

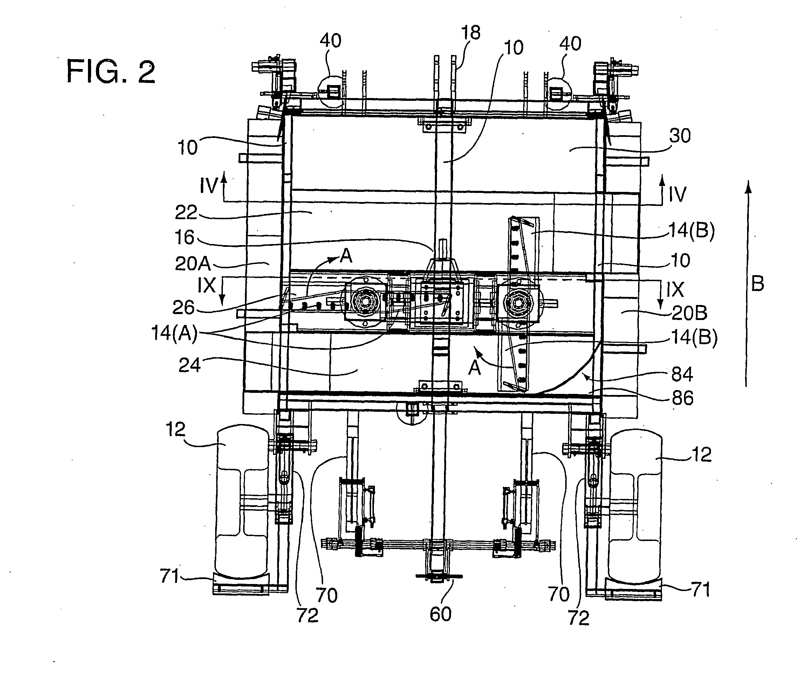

Preferring initially to Figures 1 and 2, there is shown a device for topping vegetables, prior to harvesting, which comprises a chassis 10 having a pair of rear wheels 12 to allow towing of the chassis by a farm vehicle such as a tractor (not shown). Mounted on the chassis are two pairs of rotatable blades 14, disposed side by side along the width of the chassis. The rotatable blades 14 are driven by a geared drive mechanism generally indicated by 15.

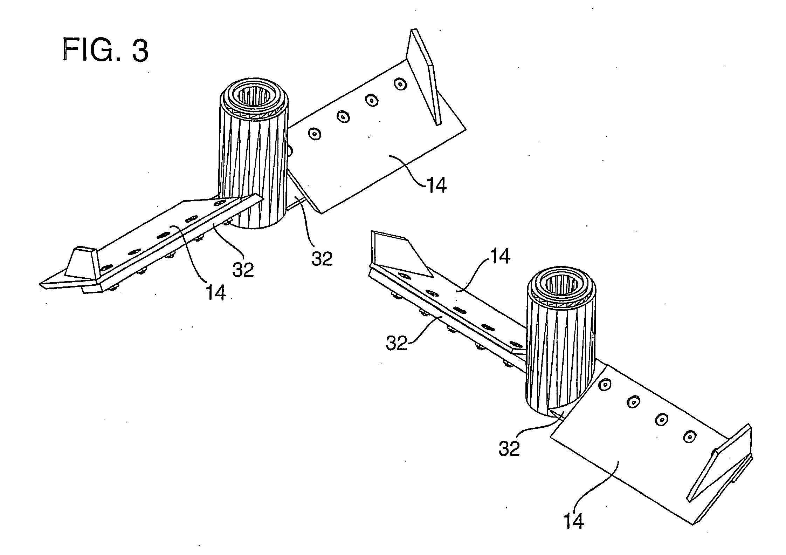

Referring now to Figure 3, the blades 14 are mounted on blade holders 32 which in turn are coupled to the drive mechanism 15 for turning the blade holders in the direction indicated by arrows 'A' on Figure 2. In the preferred embodiment the path of rotation of the pairs of blades 14 overlaps, so that there are no gaps in the cutting action on the crop being cut by the device. For this reason the gearing mechanism is geared to prevent the pairs of blades contacting during their rotation at high speed during operation of the device. Toothed gearing, and drive belts are therefore preferred. The blades 14 are rotated by the drive mechanism 15 which is powered via the drive coupling 16 shown on Figure 1 and Figure 2 through which power is supplied by the towing vehicle.

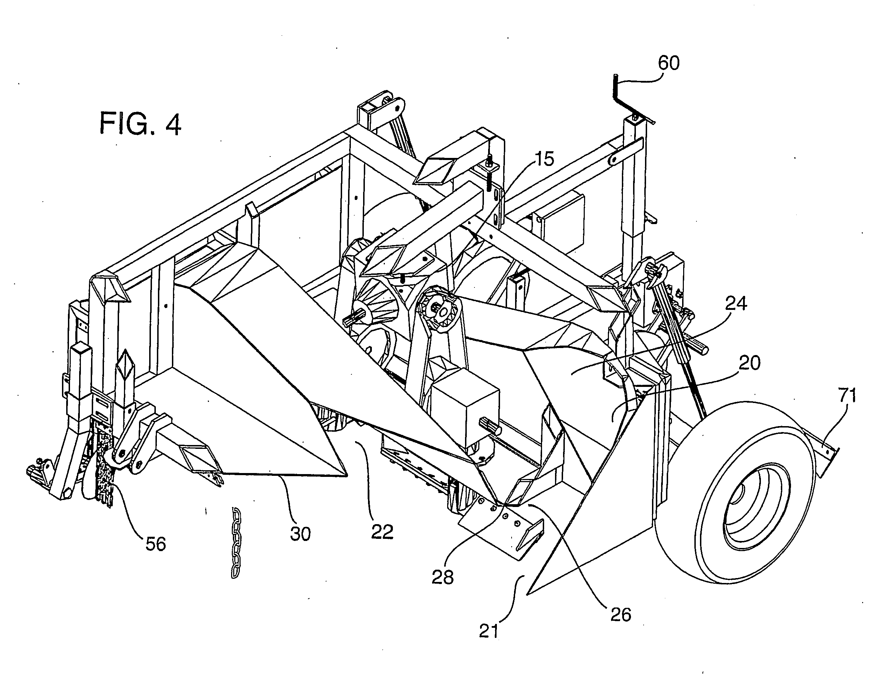

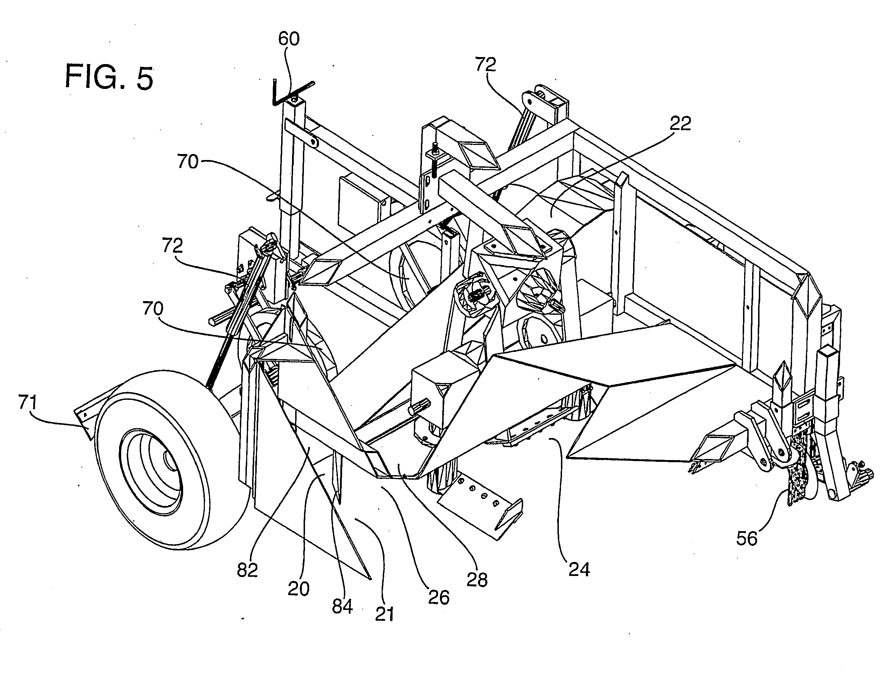

The distance between the rotatable blades 14 and the cross-member 28, see figures 4 and 5, is typically between 10cm and 40cm. If the distance is less than 10cm then a smooth vortex does not form above the blades 14 and into the plenum chambers 22 and 24, see Figure 2. If the gap is greater than 40cm then the cross-member does not separate the air flow into two distinct flows, one into each plenum chamber.

The direction of movement of the device in use, is indicated by the arrows B on Figure 1, and Figure 2.

The device incorporates a total of six chambers which comprise two diffusion chambers 20, two plenum chambers 22 and 24, a chamber 26 comprised of the area below the cross member 28 on which the rotatable blades 14 are mounted and the chamber 30 located in front of the first plenum chamber 22, see Figures 1, 2, 4 and 5.

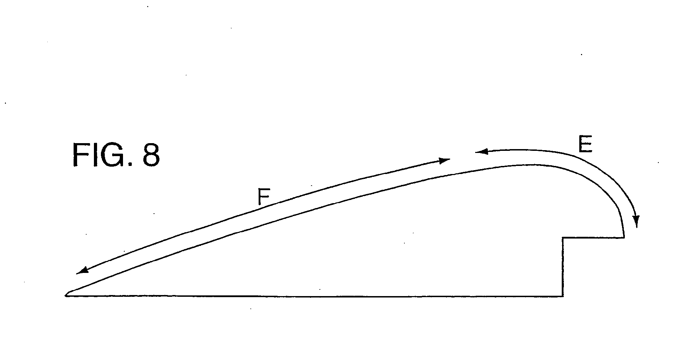

The two plenum chambers 22 and 24 are shaped such that they have a linear portion and an arcuate portion on their upper face. The arcuate portion, as indicated by arrow E on Figure 8, of the plenum chambers in combination with a linear portion, as indicated by arrow F ensures that there is a smooth flow of air from the tops of the blades through the plenum chambers and into the diffusion chambers 20 such that no low or high pressure areas are formed which would result in the cut tops/debris sticking to the sides of the plenum chambers. This directed flow of air also prevents the cut tops/debris falling directly back onto the crop once cut. It is believed that the use of rectangular shaped plenum chambers gives rise to the build up of debris (in the form of mulch) on the sides of the chamber which subsequently drops onto the crop. This build-up on the sides of the chamber is believed to be due to the formation of high and low pressure areas.

The plenum chambers 22 and 24 comprise a hollow chamber enclosed on their sides and upper face by suitably shaped sheet material such as steel. The plenum chambers 22 and 24 are open on their lower faces and also open where the air discharges from the plenum chambers 22 and 24 into the diffusion chambers 20, as can be seen from the sectional views provided in figures 4 and 5.

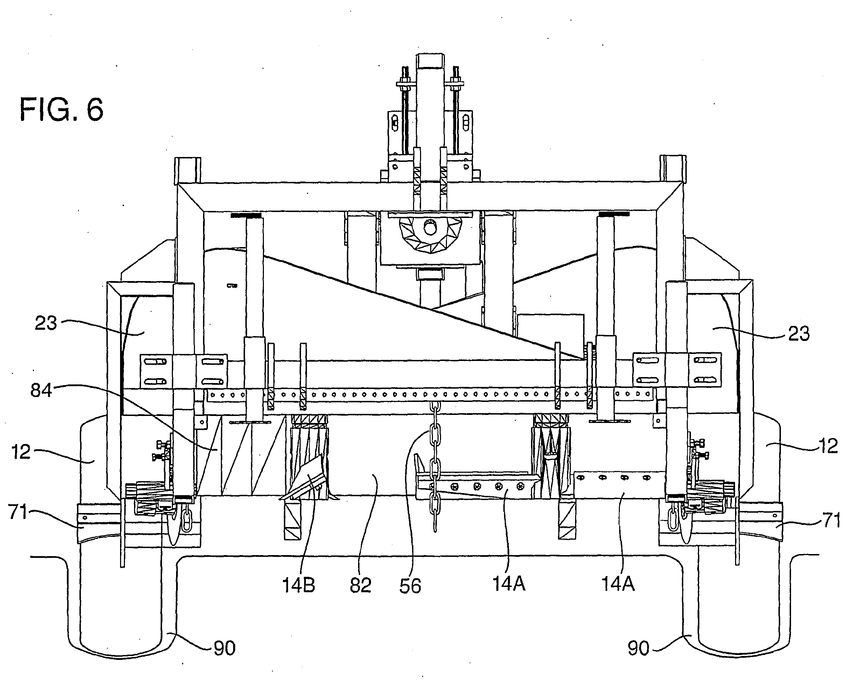

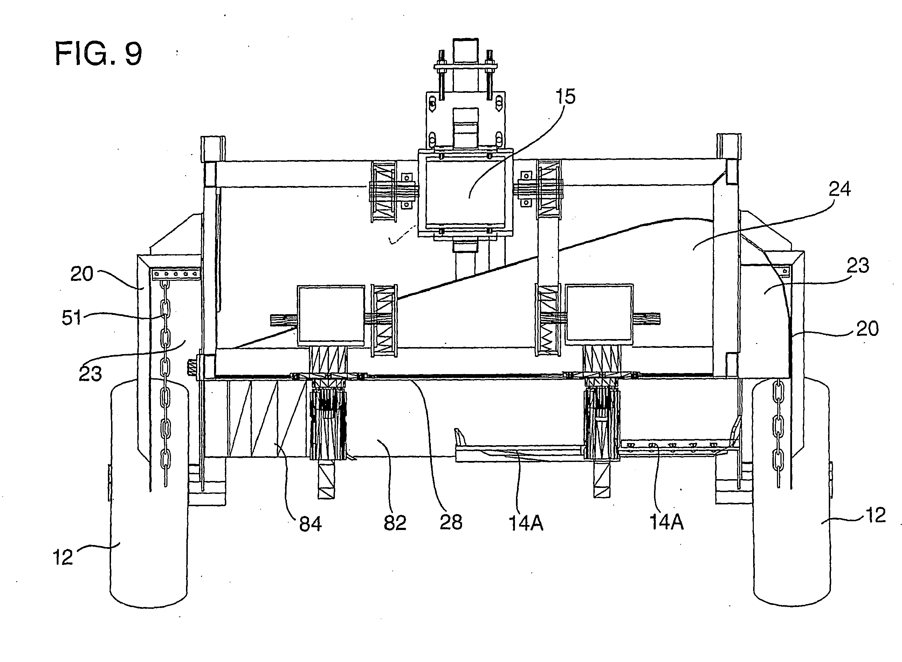

The plenum chambers discharge the air and entrained tops/debris into one end of the diffusion chamber as can be seen for the plenum chamber 24 on Figure 1. The diffusion chambers 20 are open along their lower side 21 (see figure 4 and 5) and rear side 23 (see figures 9 and 6) and incorporate an opening low down on their forward facing side 62.

A series of chains of appropriate gauge, one of which is indicated by 51 on Figure 9 help to disperse air from the rear, in use, of the diffusion chambers 20 whilst preventing the cut tops/debris from being ejected directly from the diffusion chambers 20 at high speed such that they land on the crop. Predominately the cut tops/debris are ejected via the open lower face 21 of the diffusion chamber directly into the wheelings.

Openings 62 as shown in Figure 1 are also provided at the front of the diffusion chambers 20 and a series of chains are provided across the openings 62, two of which are indicated by 64. The chains prevent material from being ejected from the opening 62 at high speed and help to disperse air from the front of the diffusion chamber.

The use of two pairs of rotatable blades 14 is preferred to the use of a single pair of longer rotatable blade. It is believed that with a single pair of longer blades a smooth airflow through the plenums and into the diffusion chambers would be more difficult, if not impossible, to obtain. The angle of the blades would need to be varied from their centre point along their length to thier tips. The blades would be liable to bending/flexing due to the high speed of rotation of the ends of the blade. Two pairs of rotatable blades are also preferred to three or more pairs of rotatable blades, higher speeds of rotation of the blades would be required for more than two pairs of blades in order to generate the same level of suction obtained from two pairs of blades rotating at lower speeds.

Referring to Figure 2 the blades 14A are twisted at an angle of 25 degrees relative to ground level and the blades 14B are twisted at an angle of 30 degrees relative to ground level. Air and debris/tops forced off the top and back of the blades follows an upward vortex pattern, the discharge angles measuring between 10 and 15 degrees less than the angle of the blades. The shape of the plenum chamber 22 is such that it is lower above the blades 14A rising higher towards the opposite side of the device i.e. above the blades 14B. The blades 14B are therefore set at a more acute angle than the blades 14A as the roof of the first plenum chamber 22 is higher above the blades 14B than it is above the blades 14A, in this way the air streams off the blades 14A and 14B add together more efficiently. The first plenum chamber 22 is responsible for carrying the majority of the tops cut during the operation of the device and so is wider than the second plenum chamber 24. The use of the wider plenum chamber 22 as compared to plenum chamber 24 gives rise to a larger proportion of the airflow from the blades 14 entering plenum chamber 22 than plenum chamber 24. The device does function with both blades set at the same angle but for optimum performance the blades should be set at 25 and 30 degrees as previously described.

The rotation of the blades 14 generates a positive pressure between the blades 14 and the cross-member 28. It is this positive pressure that results in the flow of air into and through the plenum chambers 22 and 24, the cross-member separating the airflow in the two plenum chambers 22 and 24.

Referring again to Figure 3, it can be seen that wings 34 project from the upper side, in use, of the blades 14. In use the wings 34 on the upper side of the blades assist in directing the airflow and cut tops/debris in an upwards direction such that the cut tops/debris are not thrown onto the sides of the plenum chambers 22 and 24 or onto the sides of the chamber 26 containing the rotating blades.

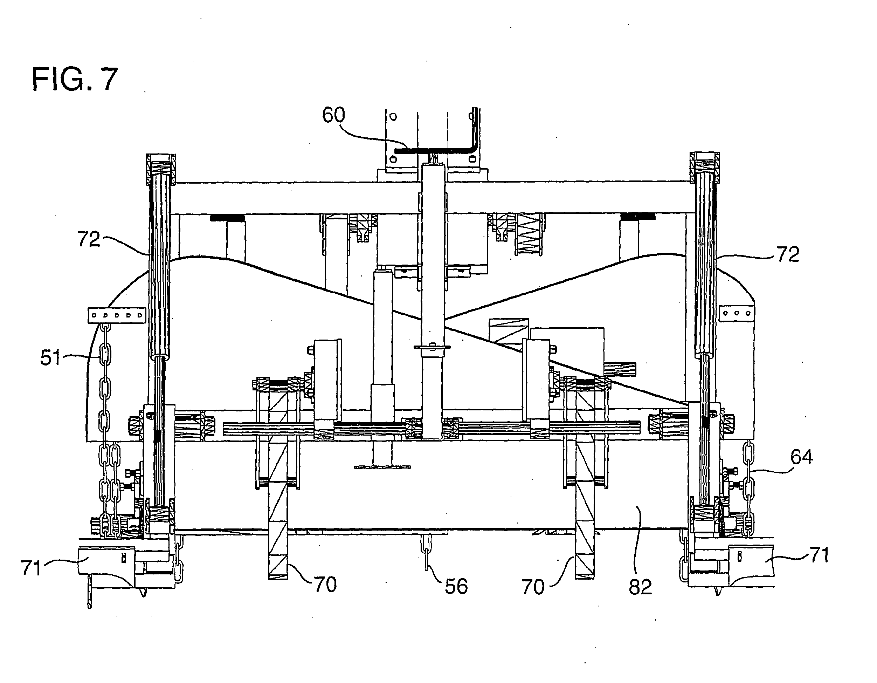

A mechanism in the form of known means is provided to allow the rear (in use) of the chassis (10) to be raised and lowered relative to the front of the chassis; by the use of the lever 60 as shown on figures 1, 4, 5 and 7 i.e. the chassis can be tilted such that the front of the chassis is lower (or higher) than the rear of the chassis so that the blades 14 can cut lower (or higher) at the front of the device than at the rear.

The rear of the device incorporates a wall 82 formed from sheet like material which comes down to immediately above ground level, as can be seen on Figures 5, 6, 7 and 9. The rear wall 82 also incorporates a curved section 84 as can be seen on Figures 2, 5, 6 and 9 which further assists in generating a smooth airflow in the plenum chamber 24 and thus helps to prevent tops /debris collecting in the corner 86, as shown on Figure 2.

Referring to Figure 5, two sensor wheels (70) at the rear of the device (in use) make contact with the ground and adjust the relative height of the chassis with respect to the ground on each side of the device by adjustment of the two hydraulic rams 72, thus ensuring that the cutting blades 14 of the device remain parallel to ground level in a crosswise direction despite variations in the level of one of the wheelings relative to ground level. This mechanism also ensures that the height of the blades above ground level is maintained above ground level despite variations in the depth of both wheelings.

Adjustment means 54 as shown on Figure 1, of known type are provided to enable the height of the lower edge 73 of the outer side 72 of the diffusion chainbers 20 to be adjusted relative to ground level. This enables the lower edge 73 of the outer side 72 of the diffusion chamber to be positioned immediately adjacent ground level.

A second aperture 90 may be provided in the diffusion chambers, as indicated by the dashed line on Figure 1 to allow the outlets from a plenum chamber on a device operated adjacent the device shown to be vented into the same diffusion chamber. In this way multiple devices may be towed and simultaneously operated by a single vehicle.

A series of chains, some of which are indicated on Figure 1 and Figure 5 by 56 are hung across the width of the opening to the chamber 30 at the front of the device. The chains being of an appropriate length such that they hang just above ground level in use. These chains allow standing tops to pass between the chains whilst helping to create a low level air flow, in use, immediately above ground level.

A series of chains of appropriate length, not shown, may also be provided across the opening at the rear of chamber 24 to generate a low level airflow.

It will be appreciated by those skilled in the art than the towing vehicle will provide means to select the height of the attachment point of the topping device disclosed herein via the attachment point 18, such that the level of the front of the chassis may be raised or lowered as required.

Wheel scrapers 71 are provided, see figures 1, 2, 3, 4, 5, 6, 7 and 9, to prevent the build-up of mud on the wheels of the device during use.

Cutting means in the form of two rotatably mounted circular blades 40 located at the front of the device, in use, are provided to cut tops lying across the wheelings of the device.

In use the chassis 10 is towed over the crop from which the tops are to be removed.

In a field of crops, wheelings are generated by the farm vehicles used to plant, maintain and harvest the crop. If tops lie across these wheelings then the weight of the farm vehicles used tends to compress portions of the tops in the wheelings into the ground such that they cannot be righted by the vegetable topping device disclosed herein. Cutting means in the form of two circular blades 40 are therefore provided on the device such that the portion of the tops in the wheeling is separated from the rest of the tops thus enabling the rest of the tops to be righted and cut by the device disclosed herein.

The rotation of the blades 14, typically at speeds between 2000 and 2500 r.p.m., generates an airflow into the device from the front, the chains 56 at the front of the device assist in maintaining the airflow as close to the ground as possible to pick the tops up whilst allowing upright tops to pass between the chains. Once past the chains the tops are stood up by the airflow in chamber 30 and then cut by the rotating blades 14 in the area below the plenum chambers 22. Once cut the airflow generated by the blades 14 carries the cut tops and associated debris into the plenum chamber and then into the diffusion chamber 20B from where the tops/debris then drop into the wheelings 90 of the tractor (see Figure 6), via the bottom of the diffusion chamber 20B. The front and rear openings of the diffusion chamber help to diffuse the air such that the tops/debris fall onto the ground in the wheelings. The tops /debris being moist in character tend to stick to the ground in the wheelings.

Field inspection is required for any crop to decide when its ready to harvest: with onions, for example, many base that decision on the percentage of tops that have weakened and dropped to the ground; further into the harvesting season all tops will have dropped; sometimes wind will lay them in a certain direction. Observation of current toppers indicates that tops lying towards a vortex are easier to lift than tops lying away from it, this also occurred with out experiments. Underneath a rotary blade a vortex rotating in the same direction as the rotation of the blade(s) occurs this can vary in shape depending on blade angle and back pressure. The front semi-circle of the blades lifts tops lying towards this vortex and the back semi-circle lifts tops lying in the opposite direction. Current toppers have nowhere for this final trim debris to exit other than being thrown around the front cowling creating mulch. The present invention provides a second plenum chamber 24 at the rear of the device such that the tops not cut below the plenum chamber 22, i.e. in the front semi-circular region of the blades; are cut in the region below the second plenum chamber 24 i.e. in the rear semi-circular region of the blades rotation; and are carried away by the airflow in the second plenum chamber 24 into the diffusion chamber 20A and subsequently fall into the wheelings of the tractor via the bottom of the diffusion chamber 20A. In this way less damage is inflicted on the cut tops and the formation of mulch like material is reduced, thus reducing the problems associated with mulch formation. It will also be appreciated that an air flow from the rear of the vehicle will be formed by the rotation of the blades which will assist in lifting tops not lifted and cut by the blades 14 below the first plenum chamber 22.

In use the sensor wheels 70 continually measure the distance between ground level, of the crop bed, and the height of the blades ensuring that the blades 14 remain both horizontal across the width of the chassis 10 and at the pre-set height for the purpose of topping the crop.

Use of term rotating blades is intended to include the use of a blade assembly wherein the blade holder generates the airflow and a small blade is attached to one edge of the holder.

It will be appreciated by those skilled in the art that each of the pairs of rotating blades mounted on their relevant holders could be replaced by single suitably shaped blades mounted on suitably adapted holders.

## Claims

1. A vegetable topping device comprising at least one rotatable blade (14), and a plenum chamber (22, 24) further comprising an outlet; **characterised in that**, in use, said rotatable blade generates an airflow which lifts the vegetable tops such that they are cut by said blade and arc then directed to said outlet from said plenum chamber by their entrainment in the airflow in combination with the plenum chamber's inherent shape said_device_having_a front_opening (30) to allow standing vegetable tops to pass into the device.

2. A device according to claim 1, wherein said rotatable blade (14) is angled to generate a positive pressure above said blade and a negative pressure below said blade.

3. A device according to either of the preceding claims, wherein said rotatable blade (14) is of the vertical rotary axis kind.

4. A device according to any of the preceding claims, wherein the device incorporates two blades (14A, 14B) which are angled between 15° and 45° relative to the ground, in use.

5. A device according to claim 4, wherein a first blade (14A) is angled at 25° and a second blade (14B) at 30° relative to the ground, in use.

6. A device according to any of the preceding claims, wherein said plenum chamber extends laterally relative to the direction of travel of the device in use and comprises a linear portion (E) and an arcuate portion (F), said arcuate portion directing said tops towards said outlet.

7. A device according to any of the preceding claims, comprising two plenum chambers (22, 24) which extend laterally relative to the direction of gravel of the device in use and an outlet corresponding to each plenum chamber, wherein said outlets are located on opposite sides of the device.

8. A device according to any of the preceding claims, further comprising wheelings and a diffusion chamber (20); wherein said outlet opens into said diffusion chamber which directs the airflow and entrained tops into said wheelings.

9. A device according to claim 8, wherein said diffusion chamber (20) is adapted to allow the outlets from two adjacent devices to be exhausted into the wheelings via said diffusion chamber.

10. A device according to any of the preceding claims, further comprising a wing (34) projecting from the upper side of said blade, in use, which assists in directing cut tops in the direction of said plenum chamber and said associated outlet.

11. A device according to any of the preceding claims, further comprising wheelings and culling means (40) for cutting tops lying across said wheeling.

12. A method for topping vegetables with a device comprising at least one rotatable blade and a plenum chamber further comprising an outlet, said method comprising the steps of:
(a) passing the standing vegetables tops through a front opening into said device
(b) righting the tops of vegetables by rotating said blade;
(c) cutting off the tops using said rotating blade; and
(d) directing the severed tops to said outlet of said plenum chamber by their entrainment in an airflow generated by said blade.

## Patentansprüche

1. Gerät zum Abschneiden der Spitzen von Gemüse, umfassend mindestens eine rotierende Klinge (14) und eine Luftkammer (22, 24), des Weiteren umfassend einen Auslass; **dadurch gekennzeichnet, dass** beim Einsatz die rotierende Klinge einen Luftstrom erzeugt, der die Gemüsespitzen anhebt, so dass sie durch die Klinge abgeschnitten werden und dann durch ihre Mitführung in dem Luftstrom in Kombination mit der inhärenten Form der Luftkammer aus der Luftkammer heraus und zum Auslass gelenkt werden, wobei das Gerät eine vordere Öffnung (30) aufweist, die es stehenden Gemüsespitzen ermöglicht, in das Gerät einzudringen.

2. Gerät gemäß Anspruch 1, wobei die rotierende Klinge (14) winkelförmig ist, um einen Überdruck über der Klinge und einen Unterdruck unter der Klinge zu erzeugen.

3. Gerät gemäß einem der vorherigen Ansprüche, wobei die rotierende Klinge (14) eine vertikale Rotationsachse aufweist.

4. Gerät gemäß einem der vorherigen Ansprüche, wobei das Gerät zwei Klingen (14A, 14B) enthält, die beim Einsatz einen Winkel zwischen 15° und 45° zum Boden aufweisen.

5. Gerät gemäß Anspruch 4, wobei beim Einsatz eine erste Klinge (14A) einen Winkel von 25° und eine zweite Klinge (14B) einen Winkel von 30° zum Boden aufweist.

6. Gerät gemäß einem der vorherigen Ansprüche, wobei die Luftkammer seitlich im Verhältnis zur Bewegungsrichtung des Geräts beim Einsatz verläuft und einen linearen Abschnitt (E) und einen gebogenen Abschnitt (F) umfasst, wobei der gebogene Abschnitt die Spitzen zum Auslass lenkt.

7. Gerät gemäß einem der vorherigen Ansprüche, umfassend zwei Luftkammern (22, 24), die seitlich im Verhältnis zur Bewegungsrichtung des Geräts beim Einsatz verlaufen, und einen Auslass entsprechend jeder Luftkammer, wobei die Auslässe sich an den gegenüberliegenden Seiten des Geräts befinden.

8. Gerät gemäß einem der vorherigen Ansprüche, des Weiteren umfassend Fahrspuren und eine Diffusionskammer (20); wobei der Auslass sich in die Diffusionskammer öffnet, die den Luftstrom und die mitgeführten Spitzen in die Fahrspuren lenkt.

9. Gerät gemäß Anspruch 8, wobei die Diffusionskammer (20) so angepasst ist, dass die Auslässe von zwei benachbarten Geräten über die Diffusionskammer in die Fahrspuren geleert werden können.

10. Gerät gemäß einem der vorherigen Ansprüche, des Weiteren umfassend einen Flügel (34), der beim Einsatz von der Oberseite der Klinge aus hervorsteht und dabei hilft, die abgeschnittenen Spitzen in die Richtung der Luftkammer und des zugehörigen Auslasses zu lenken.

11. Gerät gemäß einem der vorherigen Ansprüche, des Weiteren umfassend Fahrspuren und Schneideinrichtungen (40) zum Schneiden von Spitzen, die quer über den Fahrspuren liegen.

12. Verfahren zum Abschneiden der Spitzen von Gemüse mit einem Gerät, das mindestens eine rotierende Klinge sowie eine Luftkammer umfasst und des Weiteren einen Auslass umfasst, wobei das Verfahren die folgenden Schritte umfasst:
(a) das Einführen der stehenden Gemüsespitzen durch eine vordere Öffnung in das Gerät;
(b) das Aufrichten der Gemüsespitzen durch die Rotation der Klinge;
(c) das Abschneiden der Spitzen mithilfe der rotierenden Klinge; und
(d) das Lenken der abgetrennten Spitzen zu dem Auslass der Luftkammer durch ihr Mitführen in einem Luftstrom, der durch die Klinge erzeugt wird.

## Revendications

1. Un dispositif d'étêtage de légumes comprenant au moins une lame rotative (14) et une chambre de répartition (22, 24) comprenant en outre une évacuation, **caractérisé en ce que**, en utilisation, ladite lame rotative génère un flux d'air qui soulève les têtes des légumes de sorte qu'elles soient coupées par ladite lame et soient ensuite dirigées vers ladite évacuation de ladite chambre de répartition par leur entraînement dans le flux d'air en combinaison avec la forme inhérente de la chambre de répartition, ledit dispositif étant muni d'une ouverture avant (30) permettant à des têtes de légumes verticales d'entrer dans le dispositif.

2. Un dispositifselon la Revendication 1 où ladite lame rotative (14) est inclinée de façon à générer une pression positive au-dessus de ladite lame et une pression négative sous ladite lame.

3. Un dispositif selon l'une quelconque des Revendications précédentes, où ladite lame rotative (14) est du type à axe rotatif vertical.

4. Un dispositif selon l'une quelconque des Revendications précédentes, où le dispositifcomprenddeux lames (14A, 14B)qui sont inclinéesentre 15° et 45° par rapport au sol, en utilisation.

5. Un dispositif selon la Revendication 4, où une première lame (14A) est inclinée à 25° et unedeuxième lame (14B) à 30° par rapport au sol, en utilisation.

6. Un dispositif selon l'une quelconque des Revendications précédentesoùladite chambre de répartition s'étend latéralement par rapport à la direction de déplacement du dispositif en utilisation et comprendune partie linéaire (E) et une partie arquée (F), laditepartie arquéedirigeant lesdites têtesvers laditeévacuation.

7. Un dispositifselon l'une quelconque des Revendications précédentescomprenantdeux chambres de répartition (22, 24) qui s'étendent latéralement par rapport à la direction de déplacement du dispositif en utilisation et une évacuation correspondant à chaque chambre de répartition, où lesdites évacuationssont placées sur des côtés opposés du dispositif.

8. Un dispositif selon l'une quelconque des Revendications précédentes,comprenanten outre des rouages et une chambre de diffusion (20), où ladite évacuation s'ouvre versladitechambre de diffusionqui dirige le flux d'air et entraîne les têtes vers lesditsrouages.

9. Un dispositif selon la Revendication 8 où laditechambre de diffusion (20)est adaptée de façon à permettreaux évacuations provenant de deux dispositifs adjacentsd'être envoyées versles rouages via laditechambre de diffusion.

10. Un dispositif selon l'une quelconque des Revendications précédentes,comprenant en outre une aile (34) en saillieà partir dela partie supérieurede ladite lame, en utilisation,qui aide à diriger les têtes coupées dans la direction de ladite chambre de répartition et de ladite évacuation associée.

11. Un dispositif selon l'une quelconque des Revendications précédentes, comprenant en outre des rouages et un moyen de découpe (40) destiné à couper des têtes disposés en travers desdits rouages.

12. Un procédé d'étêtage de légumes avec un dispositif comprenant au moins une lame rotativeet une chambre de répartition comprenant en outre une évacuation, ledit procédé comprenant les opérations suivantes :
(a) le passage des têtes de légumes verticales par une ouverture avant dans ledit dispositif,
(b) le redressement destêtes de légumes par la rotation de ladite lame,
(c) la découpe des têtesau moyen de ladite lame rotative, et
(d) la directiondestêtes coupéesvers ladite évacuation de ladite chambre de répartitionpar leur entraînement dans un flux d'air généré par ladite lame.
